# EUROPÄISCHE PATENTSCHRIFT

(11) **EP 2 665 953 B1**
(45) Veröffentlichungstag und Bekanntmachung des Hinweises auf die Patenterteilung: **14.10.2015**
(21) Anmeldenummer: 12713651.3
(22) Anmeldetag: 26.03.2012
(51) Int. Cl.: F16J 15/34

(54) **WELLENDICHTUNGSANORDNUNG**
SHAFT SEAL ARRANGEMENT
ENSEMBLE GARNITURE D'ÉTANCHÉITÉ D'ARBRE

(30) Priorität: 08.04.2011 DE 102011007073
(43) Veröffentlichungstag der Anmeldung: 27.11.2013
(73) Patentinhaber: Siemens Aktiengesellschaft, 80333 München (DE)
(72) Erfinder: MATEMAN, Gesinus, NL-7552 SH Hengelo (NL)
(86) Internationale Anmeldenummer: PCT/EP2012/055274
(87) Internationale Veröffentlichungsnummer: WO 2012/136497

(56) Entgegenhaltungen:
- EP-A1- 0 781 948
- DE-A1- 3 942 408
- DE-A1-102009 012 038

## Beschreibung

Die Erfindung betrifft eine Wellendichtungsanordnung für eine Wellendichtung einer Turbomaschine, die sich in einer axialen Richtung entlang einer Rotationsachse erstreckt,
- wobei die Wellendichtungsanordnung an einem axialen Ende eine Hochdruckseite und an dem anderen axialen Ende eine Niederdruckseite aufweist, umfassend:
- ein im Betrieb rotierendes Rotorteil,
- ein stehendes Statorteil,
- mindestens eine Trockengasdichtung, welche ein an dem Rotorteil angebrachtes rotierendes Dichtelement und ein an dem Statorteil angebrachtes stehendes Dichtelement aufweist zum Abdichten eines Zwischenraums zwischen dem Rotorteil und dem Statorteil gegen einen ersten Differenzdruck,
- wobei das stehende Dichtelement und das rotierende Dichtelement an einer sich radial und in Umfangsrichtung erstreckenden Dichtfläche einander gegenüberliegend angeordnet sind,
- wobei an dem Ende der Hochdruckseite der Wellendichtungsanordnung eine Labyrinthdichtung zur Abdichtung des Zwischenraums in serieller Anordnung zu der Trockengasdichtung vorgesehen ist, umfassend einen stehenden Labyrinthdichtungsteil und einen rotierenden Labyrinthdichtungsteil,
- wobei eine sich in Umfangsrichtung und Axialrichtung erstreckende mittlere Labyrinthdichtfläche, welche sich zwischen dem stehenden Labyrinthdichtungsteil und dem rotierenden Labyrinthdichtungsteil auf einem fünften Durchmesser koaxial zur Rotationsachse angeordnet ist,
- wobei zwischen dem stehenden Dichtelement und dem Statorteil eine vierte stationäre Dichtung auf einem vierten Durchmesser angeordnet ist zur Abdichtung gegen den ersten Differenzdruck.

Trockengasdichtungen sind als Wellendichtungen in Turbomaschinen, beispielsweise in Turbokompressoren, zunehmend beliebt. Trockengasdichtungen im Sinne der vorliegenden Erfindung sind Wellendichtungen, die mindestens zwei sich um die Welle in Umfangsrichtung (bezogen auf die Rotationsachse) erstreckende Dichtelemente aufweisen, die jeweils mindestens eine zu dem gegenüberliegenden Dichtelement weisende Dichtfläche umfassen, mittels derer die Trockengasdichtung den Zwischenraum zwischen einem stationären Teil, beispielsweise einem Gehäuse und dem rotierenden Teil abdichtet. Die Dichtelemente stehen sich mit ihren ringförmigen Dichtflächen in der Regel in einer sich in Umfangsrichtung und radial erstreckenden Dichtebene gegenüber. Eines der Dichtelemente rotiert mit dem rotierenden Teil und das andere Dichtelement ruht relativ zu dem Gehäuse. Mindestens eine der einander zugewendeten Dichtflächen weist oberflächliche Vorsprünge und/oder Ausnehmungen auf, welche in Zusammenwirkung mit einem Dichtgas für den Aufbau eines Gasfilms zwischen den beiden Dichtelementen an den Dichtflächen sorgen, so dass die Trockengasdichtung während der vorgesehenen Rotation berührungsfrei zwischen dem rotierenden Dichtelement und dem stehenden Dichtelement arbeitet. Die Trockengasdichtung erfordert ein Dichtungsgas, welches im Wesentlichen keine flüssigen Bestandteile aufweist um beschädigungsfrei bzw. berührungslos abzudichten. Die Ausnehmungen bzw. Vorsprünge können verschiedene Formen aufweisen und sind bevorzugt an nur einer Dichtungsfläche vorgesehen, bevorzugt an der Dichtungsfläche des rotierenden Dichtelementes. Ausnehmungen können beispielsweise U-förmig oder "Tannenbaum"-förmig oder T-förmig oder in der Art einer Spirale ausgebildet sein, damit es zu einer Ausbildung eines stabilen Dichtungsfilmes des Dichtungsgases zwischen den beiden Dichtflächen kommt.

Entscheidende Vorteile ergeben sich durch den Einsatz von Trockengasdichtungen beispielsweise an Verdichtern dadurch, dass die Leckage vergleichsweise gering ist und kein Schmieröl benötigt wird, wie beispielsweise bei Dichtungen, die mit Flüssigkeiten arbeiten. Regelmäßig werden Trockengasdichtungen auf einer Hochdruckseite mit dem Dichtungsgas beaufschlagt, wobei eine geringe Leckage dieses Dichtungsgases die Trockengasdichtung von der Hochdruckseite zu einer Seite niedrigeren Drucks - einer Niederdruckseite - passiert, wo in der Regel eine Ableitung dieser Leckage in eine sogenannte Vent-Leitung oder Flare-Leitung erfolgt. Um den Verbrauch an dem speziell aufbereiteten Dichtungsgas zu reduzieren, ist die Trockengasdichtung regelmäßig von anderen Wellendichtungen umgeben. Insbesondere auf der Hochdruckseite befindet sich regelmäßig eine Labyrinthdichtung, welche die Ausströmung des Dichtungsgases zu der von der Trockengasdichtung abgewendeten Seite hochdruckseitig reduziert. Auf der Hochdruckseite der Trockengasdichtung ist in der Regel ein Prozessgas, das in dem Fall eines Turboverdichters unter einem höheren Betriebsdruck steht. Das Dichtungsgas muss gegenüber diesem Prozessgas einen Überdruck aufweisen, um das potentiell verschmutzte Prozessgas von der empfindlichen Trockengasdichtung fern zu halten.

Die DE 10 2009 012 038 A1 zeigt eine Wellendichtung der eingangs genannten Art, wobei es - insbesondere bei einem Differenzdruck über der Wellendichtungsanordnung von mehr als 200bar - im Schadensfall an der Wellendichtung zu Folgeschäden kommen kann, zum Beispiel zu einer zerstörenden Überlastung eines Axiallagers der Maschine.

Ausgehend von dem beschriebenen Stand der Technik hat es sich die Erfindung zur Aufgabe gemacht, dass ein Schaden an der Trockengasdichtung weitestgehend geringe Auswirkungen auf den Schub an dem Rotor hat zu dessen Welle die Trockengasdichtung dichtet.

Eine Lösung für diese erstgenannte Aufgabe bietet die Erfindung mit einer Wellendichtungsanordnung der eingangs definierten Art an mit den zusätzlichen Merkmalen des kennzeichnenden Teils des Anspruchs 1. Die Unteransprüche beinhalten vorteilhafte Weiterbildungen der Erfindung.

In der Begriffswelt der Erfindung ist die Rotationsachse eine zentrale Achse der Wellendichtungsanordnung, die als Rotationsachse bezeichnet ist, da es sich bei der Trockengasdichtung der Wellendichtungsanordnung um eine Wellendichtung handelt, die naturgemäß eine in einem Betrieb rotierende Welle umgibt. Sämtliche ohne weitere Erläuterung auf die Begriffswelt einer derartigen Kreisbewegung bezogenen Angaben - beispielsweise axial, radial, Umfangsrichtung, Durchmesser - beziehen sich auf die Rotationsachse als Zentrum einer Drehbewegung.

Die Begriffswelt unterscheidet weiterhin zwei grundlegend verschiedene Dichtungstypen, nämlich die Wellendichtung, die zwei relativ zueinander in Bewegung befindliche Bauteile zueinander abdichtet und die stationäre Dichtung, welche zwei relativ zueinander in Ruhe befindliche Bauteile zueinander abdichtet.

Mit Bezug auf die erfindungsgemäße Wellendichtung werden die Begriffe Hochdruckseite und Niederdruckseite benutzt, was in anderen Worten bedeutet, dass die Wellendichtung gegen eine Druckdifferenz ein Überströmen eines Fluides von einer Seite höheren Druckes auf eine Seite niedrigeren Druckes verhindert bzw. reduziert und dementsprechend die Druckdifferenz aufrecht erhält.

Die Erfindung entfaltet besondere Vorteile bei einem Differenzdruck über der erfindungsgemäßen Wellendichtungsanordnung, der mehr als 200bar beträgt. Insbesondere dann ist es zweckmäßig, wenn die sich in Umfangsrichtung und Axialrichtung erstreckende Dichtfläche zwischen dem stehenden Labyrinthdichtungsteil und dem rotierenden Labyrinthdichtungsteil auf dem fünften Durchmesser koaxial zur Rotationsachse im Wesentlichen identisch ist mit einem vierten Durchmesser, auf dem sich eine vierte stationäre Dichtung zwischen dem Statorteil und dem stehenden Dichtelement der Trockengasdichtung befindet, weil eine größere Abweichung von dieser geometrischen Anforderung hohe Kräfte an einem Axiallager hervorrufen kann, wenn die Trockengasdichtung einen Defekt aufweist. Bevorzugt ist die Differenz zwischen dem vierten Durchmesser und dem fünften Durchmesser geringer als 10% des fünften Durchmessers.

Auf die erfindungsgemäße Weise findet eine nur verhältnismäßig geringe Veränderung des Schubes auf eine Welle einer Turbomaschine statt, im Falle eines Defektes der Trockengasdichtung der erfindungsgemäßen Wellendichtungsanordnung, da die Durchmesser, an denen die unterschiedlichen Drücke, die sich durch den Differenzdruck über die Trockengasdichtung unterscheiden, an dem Rotor anliegen bei einem Abbau über die Trockengasdichtung selbst sich nicht unterscheiden, zu dem Fall, dass der Differenzdruck über die angeschlossene Labyrinthdichtung abgebaut wird.

Insbesondere bei einem Verdichter mit einer Trockengasdichtung, die eine Druckdifferenz von über 200bar, abbaut im normalen Betriebszustand ist, ist ein Axiallager in der Regel nicht in der Lage, die Schubveränderung zu ertragen, wenn die Trockengasdichtung einen Defekt hat und sich daraus eine Veränderung des Wellenschubes ergibt, sollte nicht das vorhergehend definierte Kriterium hinsichtlich der Durchmesser erfüllt sein.

Damit die Dichtelemente der Trockengasdichtung der Wellendichtungsanordnung keine unnötig hohen Belastungen erfahren, die die erforderliche Geometrie für den Aufbau des die Berührungslosigkeit herstellenden Schmierfilms zwischen den Dichtflächen gewährleisten, ist es sinnvoll, wenn eine dritte stationäre Dichtung zwischen dem Rotorteil und dem rotierenden Dichtelement auf einen dritten Durchmesser angeordnet ist und der dritte Durchmesser sich von dem vierten Durchmesser um nicht mehr als 10% des vierten Durchmessers unterscheidet.

Die erfindungsgemäße Ausbildung ist besonders vorteilhaft für Wellendichtungsanordnungen, bei denen das stehende Dichtelement der Trockengasdichtung zu dem Statorteil mittels einer vierte stationäre Dichtung auf einem vierten Durchmesser abgedichtet ist und eine sich in Umfangsrichtung und Axialrichtung erstreckende mittlere Labyrinthdichtfläche zwischen dem stehenden Labyrinthdichtungsteil und dem rotierenden Labyrinthdichtungsteil auf einem fünften Durchmesser koaxial zur Rotationsachse angeordnet ist, wobei der fünfte Durchmesser kleiner oder gleich dem vierten Durchmesser ist.

Eine andere Aufgabe ist die Reduktion der Komplexität einer Turbomaschine, die eine Wellendichtungsanordnung der eingangs beschriebenen Art aufweist, wobei die Montage einer derartigen Turbomaschine vereinfacht werden kann und die Raumanforderung der Wellendichtungsanordnung verringert.

Das bereits eingangs erwähnte Statorteil ist als stehendes Bauteil zu verstehen, welches bevorzugt Träger von Bauteilen zumindest der Trockengasdichtung der Wellendichtungsanordnung ist.

Das Statorteil ist bevorzugt als eine Statorhülse für die Wellendichtungsanordnung ausgebildet, dass es in eine Ausnehmung eines Stators einsetzbar ist, der bevorzugt als Gehäuse der Turbomaschine ausgebildet ist. Hierbei kann es sich auch um mit dem Gehäuse verbundene Bauteile handeln, so dass eine indirekte Verbindung des Statorteils mit einem Gehäuse einer Turbomaschine vorgesehen ist. Jedenfalls ist das Statorteil in einer Ausbildung als Statorhülse dazu geeignet, die Bauelemente der Wellendichtungsanordnung in einer Einheit zusammenzufassen, so dass es sich bei der Wellendichtungsanordnung um ein für sich bewegliches Modul handelt, das im Rahmen der Montage als Ganzes an der Welle eines Rotors anbringbar ist. Bevorzugt wird die erfindungsgemäße Wellendichtungsanordnung zunächst an der Welle angebracht und anschließend gemeinsam mit der Welle in beispielsweise ein Topfgehäuse (barrel-type-casing) eingeführt oder in eine untere Gehäusehälfte eingelegt und in dem Gehäuse befestigt.

Besondere Vorteile ergeben sich durch eine Ausbildung der Wellendichtungsanordnung mit einer Statorhülse und einer Rotorhülse, welche beide jeweils Träger der Labyrinthdichtung sind, aufgrund der Reduktion der Komplexität in Folge der Verringerung der Teileanzahl einer Turbomaschine, da die an die Trockengasdichtung der Wellendichtungsanordnung angrenzende Labyrinthdichtung somit Bestandteil der Wellendichtungsanordnung ist. Der Vorteil der Vereinfachung ist insbesondere im Rahmen der Montage signifikant, da nur ein einzelnes Modul an der Welle angebracht werden muss und die komplexen Ausrichtarbeiten eines Rotors zu der Wellendichtungsanordnung und dem herkömmlich von diesem getrennt angeordneten Labyrinthdichtungseinsatz stark vereinfacht werden bzw. teilweise entfallen. Im Stand der Technik mussten teilweise schwierige und zeitaufwändige Ausrichtungen stattfinden, insbesondere der Bauteile Rotor, Trockengasdichtung, Labyrinthdichtung bzw. Gehäuse zueinander. Aufgrund der Kombination der Labyrinthdichtung mit der Trockengasdichtung in der bevorzugten Wellendichtungsanordnung ist es darüber hinaus möglich, den Bauraum einer Wellendichtung einer Turbomaschine zu verringern, insbesondere, weil die Labyrinthdichtung nicht mehr eine eigene Befestigung an dem Gehäuse erfordert, sondern diese mit dem Wellendichtungsanordnung direkt an dem Gehäuse befestigt ist. Dieses Bauraumersparnis führt insbesondere zu einem geringeren axialen Bauraumbedarf, welche Verringerung eine Reduktion der erforderlichen Länge der Welle des Rotors ermöglicht, wodurch sich entscheidende rotordynamische Vorteile ergeben, insbesondere Schwingungsamplituden geringer ausfallen und sich etwaige Resonanzfrequenzen in Folge der Versteifung vorteilhaft erhöhen. Bei ansonsten gleichen Betriebsparametern einer Turbomaschine ermöglicht dies eine Verringerung des Wellendurchmessers, so dass bei angenommenem gleichen Radialspielbedarf eine kleinere Fläche durch die Wellendichtung abzudichten ist, so dass eine nur geringere potentielle Leckagemenge entsteht und sich der Wirkungsgrad der Turbomaschine erhöht.

Sinnvoll ist die Anordnung der Labyrinthdichtung auf der Hochdruckseite als die axial äußerste Wellendichtung, so dass gewährleistet ist, dass keine Verunreinigungen von der Hochdruckseite ungehindert zur Trockengasdichtung der Wellendichtungsanordnung gelangen können. Sinnvoll ist der Wellendichtungsanordnung an dem Statorteil mit einer zweiten stationären Dichtung versehen, so dass das Statorteil dichtend in einer Ausnehmung des Stators einsetzbar ist. Weiterhin ist zweckmäßig das Rotorteil mit einer stationären Dichtung versehen, so dass das Rotorteil dichtend auf die Welle eines Rotors anbringbar ist. Vorteilhaft kann die Welle des Rotors mit einem Absatz versehen sein, an dem das Rotorteil mit einer Kontaktfläche zur axialen Anlage kommt. Beispielsweise handelt es sich bei den stationären Dichtungen zwischen der Welle und dem Rotorteil bzw. zwischen der Statorausnehmung und dem Statorteils um Dichtungen mit einem V-förmigen Querschnitt (PTFE Cup seals), welcher sich unter einer Druckdifferenz derart aufweitet, dass die Dichtwirkung unterstützt wird.

Die Erfindung bezieht sich nicht nur auf eine Wellendichtungsanordnung, sondern auch auf eine Turbomaschine umfassend eine erfindungsgemäße Wellendichtungsanordnung, zumindest ein Gehäuse und einen Rotor mit einer Welle.

Zweckmäßig weist eine vorteilhafte Weiterbildung der Erfindung eine Zuleitung eines Dichtungsgases zwischen der Labyrinthdichtung und der Trockengasdichtung der Wellendichtungsanordnung in den axialen Zwischenraum auf, so dass die Labyrinthdichtung einen Austritt des aufbereiteten und reinen Dichtungsgases in Richtung der Hochdruckseite reduziert und die Trockengasdichtung nur mit dem reinen Dichtungsgas beaufschlagt wird. Zweckmäßig ist hierzu das Dichtungsgas gegenüber einem Prozessgas jenseitig der Labyrinthdichtung auf der Hochdruckseite in einem Überdruck, so dass kein Anteil des Prozessgases die Trockengasdichtung erreichen kann. Auf der Niederdruckseite der Trockengasdichtung ist zweckmäßig eine Dichtungsableitung vorgesehen, welche das reine Dichtungsgas ggf. als Gemisch mit einem auf der Niederdruckseite anstehenden anderen Gas einer Dichtungsgasaufbereitung oder einer Abfackelung zuleitet.

Der vorteilhaften Ausbildung des stehenden Labyrinthdichtungsteils und des rotierenden Labyrinthdichtungsteils als Teile des Statorteils bzw. des Rotorteils ist derart zu verstehen, dass auch eine zumindest teilweise einstückige Ausbildung dieser jeweils beiden Bauelemente umfasst ist. Sowohl der rotierende Teil als auch der stehende Teil der Labyrinthdichtung können Spitzen aufweisen, wobei es sich um ein echtes Labyrinth oder ein Durchblicklabyrinth handeln kann. Unter der erfindungsgemäßen festen Anbringung der Labyrinthdichtungsteile an den gegebenenfalls als Hülsen ausgebildeten Statorteil und Rotorteil ist eine lösbare Befestigung zu verstehen, welches insbesondere alternativ zu der zumindest teilweisen einstückigen Ausbildung vorgesehen werden kann.

Im Folgenden ist die Erfindung anhand von Ausführungsbeispielen unter Bezugnahme auf Zeichnungen näher erläutert, wobei sich dem Fachmann aus insbesondere beliebiger Kombination der Ansprüche von den Ausführungsbeispielen abweichende Möglichkeiten der Ausführung der Erfindung ergeben. Es zeigen:

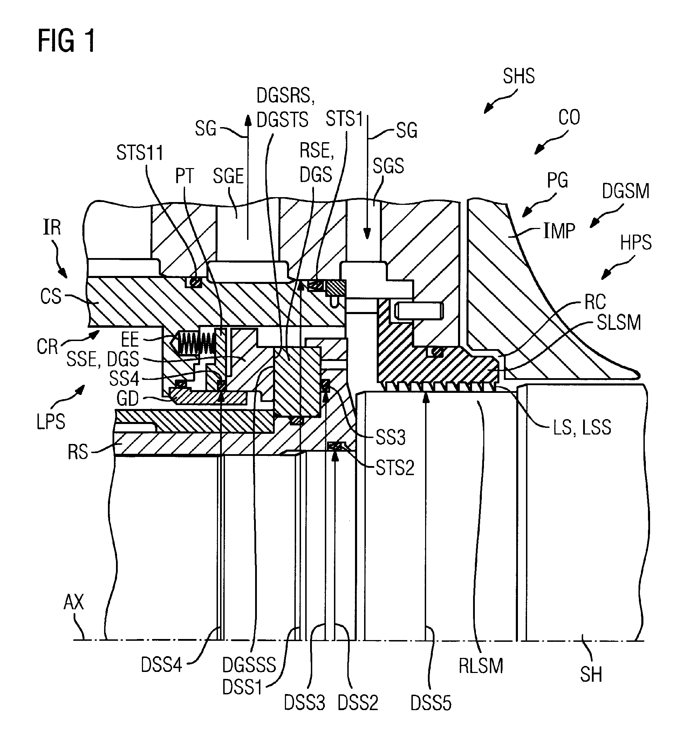

Figuren 1 -3 jeweils einen Längsschnitt durch einen erfindungsgemäße Wellendichtungsanordnung.

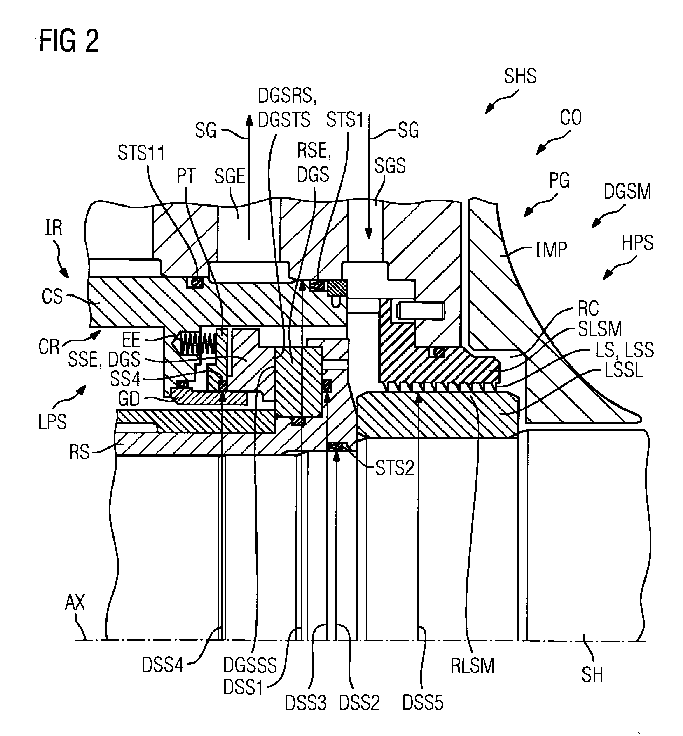

In der folgenden Beschreibung sind identische Bauelemente oder Bauelemente mit identischen Funktionen mit gleichem Bezugszeichen versehen. Ausdrücke, wie axial, radial, Umfangsrichtung, Durchmesser und Radius beziehen sich auf eine Rotationsachse AX, welche eine zentrale Achse einer erfindungsgemäßen Wellendichtungsanordnung DGSM ist. Die in den Figuren 1 und 2 dargestellte Wellendichtungsanordnung DGSM umfasst ein Statorteil CS und ein Rotorteil RS sowie eine Trockengasdichtung DGS und eine Labyrinthdichtung LS. Das Rotorteil RS der Wellendichtungsanordnung DGSM ist mittels einer zweiten statischen Dichtung STS2 auf einem Durchmesser DSS2 auf einer Welle SH eines Rotors R dichtend angebracht. Die Welle SH ist gleichfalls Trägerin mindestens eines nicht dargestellten Laufrades einer Turbomaschine CO, die in nicht näher dargestellter Weise als Zentrifugalverdichter ausgebildet ist.

Das Statorteil CS ist mittels einer ersten stationären Dichtung STS1 auf einem ersten Durchmesser DSS1 dichtend in eine Statorausnehmung CR eingesetzt. Die erste stationäre Dichtung STS1 und die zweite stationäre Dichtung STS2 weisen ein V-Profil auf, welches in einer jeweiligen sich in Umfangsrichtung erstreckenden Dichtungsnut derart angeordnet ist, dass sich das V-Profil aufweitet, wenn von einer Hochdruckseite HPS eine Druckbeaufschlagung der stationären Dichtung erfolgt. Der Wellendichtungsanordnung DGSM weist eine axiale Hochdruckseite HPS und eine axiale Niederdruckseite LPS auf, wobei die Hochdruckseite HPS einem gegenüber der Niederdruckseite LPS unter Überdruck stehenden Prozessgas PG ausgesetzt ist. Das Statorteil CS ist gegenüber der Statorausnehmung CR zusätzlich mit einer O-Ringdichtung STS11 abgedichtet. Die Wellendichtungsanordnung DGSM ist in den Figuren 1, 2, 3 Bestandteil einer nicht in Gänze dargestellten Wellendichtung SHS.

Ein Zwischenraum IR zwischen dem Statorteil CS und dem Rotorteil RS ist mittels der Trockengasdichtung DGS einerseits und in serieller Anordnung dazu mit der Labyrinthdichtung LS andererseits abgedichtet. Die Trockengasdichtung DGS dient hierbei dem hauptsächlichen Abbau der Druckdifferenz zwischen der Hochdruckseite HPS und der Niederdruckseite LPS. Zwischen der Trockengasdichtung DGS und der Labyrinthdichtung LS ist eine Dichtungsgaszuleitung SGS eines besonders reinen Dichtungsgases SG vorgesehen. Die Funktion der Labyrinthdichtung LS ist hierbei die Reduktion des Austrittes des Dichtungsgases SG in Richtung der Hochdruckseite bzw. in das potentiell verunreinigte und chemisch aggressive Prozessgas PG. Die Trockengasdichtung DGS wird daher hochdruckseitig nur mit dem sauberen und trockenen Dichtungsgas SG beaufschlagt, welches gegenüber dem Prozessgas PG einen Überdruck aufweist. Auf der Niederdruckseite LPS der Trockengasdichtung DGS ist eine Dichtungsgasableitung SGE der nur geringen Leckage der Trockengasdichtung DGS vorgesehen, welche in einen nicht dargestellten Vent oder eine Abfackelung bevorzugt mündet.

Die Trockengasdichtung DGS weist ein rotierendes Dichtelement RSE und eine stehenden Dichtelement SSE auf, die sich mit einer jeweiligen Dichtoberfläche an einer gemeinsamen Trockengasdichtungsdichtfläche DGSSS gegenüberstehen. Das rotierende Dichtelement RSE ist gegenüber dem Rotorteil RS mittels einer dritten stationären Dichtung SS3, die sich auf einem dritten Durchmesser DSS3 in Umfangsrichtung erstreckt, gegenüber dem Differenzdruck abgedichtet. Das Statorteil CS weist ein elastisches Element EE auf, welches mittels einer Führung GD und eines Kolbens PT das stehende Dichtelement SSE gegen das rotierende Dichtelement RSE vorspannt. Das stehende Dichtelement SSE ist gegenüber dem Kolben PT mittels einer vierten stationären Dichtung SS4 auf einem vierten Durchmesser DSS4 gegen den Differenzdruck abgedichtet. In der Begriffswelt der Erfindung zählen das elastische Element EE und der Kolben PT sowie eine Führung GD zu dem Statorteil CS hinzu.

Die Labyrinthdichtung LS weist ein stehendes Labyrinthdichtungsteil SLSM und ein rotierendes Labyrinthdichtungsteil RLSM auf, die sich an einer sich axial und in Umfangsrichtung erstreckenden mittleren Labyrinthdichtfläche LSS einander gegenüber stehen, wobei sich die mittlere Labyrinthdichtfläche LSS in Umfangsrichtung auf einem fünften Durchmesser DSS5 erstreckt. Unter der mittleren Labyrinthdichtungsfläche ist eine Fläche zu verstehen, welche sich axial und in Umfangsrichtung entlang des konstanten fünften Durchmessers DSS5 erstreckt, wobei der fünfte Durchmesser das Ergebnis einer Kreisflächengewichteten Mittelung ist von dem hochdruckseitigen äußeren Durchmesser, dem hochdruckseitigen inneren Durchmesser, dem niederdruckseitigen äußeren Durchmesser, dem niederdruckseitigen inneren Durchmesser der Öffnung der Labyrinthdichtung LS.

Das rotierende Dichtelement RSE steht dem stehenden Dichtelement SSE an der Trockengasdichtungsfläche DGSSS mit einer rotierenden Dichtfläche DGSRS gegenüber, welche mit Vorsprüngen und Ausnehmungen versehen ist, die bevorzugt keilförmig und/oder spiralförmig sind. Das stehenden Dichtelement SSE weist an einer stehenden Dichtungsfläche DGSTS, die der Trockengasdichtungsdichtfläche DGSSS zugewendet ist, ist der Ausbildung der gegenüberliegenden rotierenden Dichtfläche DGSRS derart angepasst, dass ein berührungsloser Betrieb der Trockengasdichtung DGS unter Ausbildung eines entsprechenden Schmierfilms des Dichtungsgases SG gewährleistet ist.

Erfindungsgemäß ist in allen drei Ausführungsbeispielen eine besondere Eignung für die Hochdruckanwendung bei Differenzdrücken von über 200bar gegeben. Es befindet sich die Labyrinthdichtungsfläche LSS auf einem im Wesentlichen identischen fünften Durchmesser DSS5 wie die vierte stationäre Dichtung SS4 zwischen dem Rotorteil RS und dem rotierenden Dichtelement RSE bzw. die Differenz zwischen dem fünften Durchmesser DSS5 und dem vierten Durchmesser DSS4 ist kleiner als 10% des fünften Durchmessers DSS5.

Weiterhin ist zur Minimierung von mechanischer Belastung auf die Dichtelemente der Trockengasdichtung DGS die Differenz zwischen dem dritten Durchmesser DSS3 und dem vierten Durchmesser DSS4 geringer als 10% von dem dritten Durchmesser DSS3 oder alternativ geringer als 10% von dem vierten Durchmesser DSS4. Entscheidend hierbei ist die jeweilige Nähe des fünften DSS5, vierten DSS4 und dritten DSS3 Durchmessers, wobei die Nähe des fünften Durchmessers DSS5 zu dem vierten Durchmesser DSS4 Priorität hat.

Die Figur 1 zeigt eine zweiteilige Ausbildung der Wellendichtungsanordnung DGSM, bei der die Trockengasdichtung DGS als eine Montageeinheit umfassend das Statorteil CS und das Rotorteil RS an der Welle SH angebracht wird. Im Wesentlichen unabhängig davon ist das rotierende Labyrinthdichtungselement RLSM als Wellenabsatz ausgebildet, der sich an den Wellenabschnitt anschließt, an dem das Rotorteil RS angebracht ist. Der stationäre Teil der Labyrinthdichtung SLSM ist mit einem Absatz an der Statorausnehmung CR fest verbunden und dementsprechend nur indirekt mit dem Statorteil CS verbunden.

Die Figur 2 zeigt eine insbesondere als Nachrüstlösung geeignete Ausbildung der erfindungsgemäßen Wellendichtungsanordnung DGSM. Eine ggf. ursprünglich nicht mit der erfindungsgemäßen Durchmesserkonfiguration angeordnete Labyrinthdichtung LS ist mit dem stehenden Labyrinthdichtungsteil SLSM vergleichbar, wie dieses in Figur 1 an einem Absatz der Statorausnehmung CR befestigt ist. Der rotierende Teil der Wellendichtung RLSM ist als den Durchmesser der Welle vergrößernde Hülse SL ausgebildet, die speziell derart dimensioniert ist, dass die erfindungsgemäßen Durchmesserparameter an der Trockengasdichtung DGS und der Labyrinthdichtung LS vorliegen. Eine derartige Konfiguration ist nicht nur als Nachrüstlösung interessant, sondern auch insoweit von Vorteil, als dass der gegenüber der umgebenden Welle SH beidseitig größere Dichtungsdurchmesser der Trockengasdichtung DGS, insbesondere der vierte Durchmesser DSS4 nicht zwangsweise konstruktiv zu einem großen Wellenabsatz der Welle SH führen muss, welcher wiederum große Laufraddurchmesser erforderlich macht, damit der Rotor R fügbar ist. Stattdessen wird als rotierendes Dichtungselement RLSM der Labyrinthdichtung LS eine den Durchmesser der Welle SH in dem Bereich der Labyrinthdichtung LS vergrößernde Hülse SL vorgesehen. Die Vergrößerung mittels dieser Hülse SL kann flexibel an die übrigen konstruktiven Gegebenheiten der Turbomaschine angepasst werden.

Zusätzlich ist es möglich, wie in den Figuren 1 bis 3 dargestellt, dass die strömungsführende Kontur IMP eine wellennahe Ausnehmung RC aufweist, in der ein axialer Abschnitt der Wellendichtungsanordnung DGSM angeordnet ist. Auf diese Weise verkürzt sich die Welle SH zum Vorteil der Rotordynamik, so dass die zu berücksichtigenden Schwingungen geringer ausfallen und die Radialspiele zu Gunsten eines gesteigerten Wirkungsgrades kleiner dimensioniert werden können.

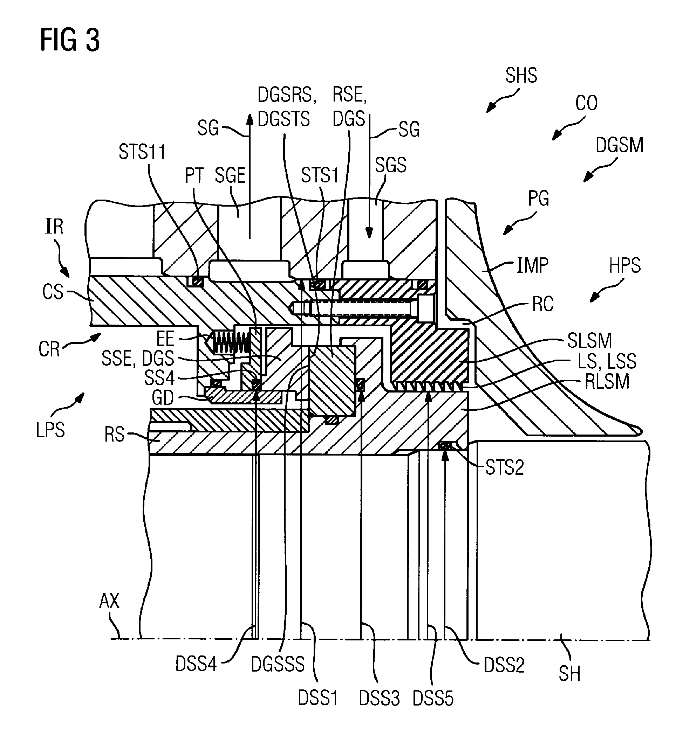

Zusätzlich axialer Bauraum lässt sich mit der in Figur 3 dargestellten Ausbildung einsparen, wenn der rotierende Teil RLSM und der stationäre Teil SLSM der Labyrinthdichtung LS jeweils fester Bestandteil des Rotorteils RS bzw. des Statorteils CS sind oder an diesen fest angebracht sind.

Zusätzlich erspart diese einmodulige Bauweise Montage und Ausrichtaufwand während der Montage, da diese derartig einstückige Wellendichtungsanordnung DGSM bereits im Vorfeld zueinander ausgerichtet werden kann.

## Patentansprüche

1. Wellendichtungsanordnung (DGSM) für eine Wellendichtung (SHS) einer Turbomaschine (CO),
die sich in einer axialen Richtung entlang einer Rotationsachse (AX) erstreckt,
- wobei die Wellendichtungsanordnung (DGSM) an einem axialen Ende eine Hochdruckseite (HPS) und an dem anderen axialen Ende eine Niederdruckseite (LPS) aufweist, umfassend:
- ein im Betrieb rotierendes Rotorteil (RS),
- ein stehendes Statorteil (CS),
- mindestens eine Trockengasdichtung (DGS), welche ein an dem Rotorteil (RS) angebrachtes rotierendes Dichtelement (RSE) und ein an dem Statorteil (CS) angebrachtes stehendes Dichtelement (SSE) aufweist zum Abdichten eines Zwischenraums (IR) zwischen dem Rotorteil (RS) und dem Statorteil (CS) gegen einen ersten Differenzdruck,
- wobei das stehende Dichtelement (SSE) und das rotierende Dichtelement (RSE) an einer sich radial und in Umfangsrichtung erstreckenden Dichtfläche einander gegenüberliegend angeordnet sind,
- wobei an dem Ende der Hochdruckseite (HPS) der Wellendichtungsanordnung (DGSM) eine weitere Zusatzwellendichtung zur Abdichtung des Zwischenraums (IR) in serieller Anordnung zu der Trockengasdichtung (DGS) vorgesehen ist, umfassend einen stehenden Wellendichtungsteil und einen rotierenden Wellendichtungsteil,
- wobei eine sich in Umfangsrichtung und Axialrichtung erstreckende mittlere Wellendichtungsfläche zwischen dem stehenden Wellendichtungsteil und dem rotierenden Wellendichtungsteil auf einem fünften Durchmesser (DSS5) koaxial zur Rotationsachse (AX) angeordnet ist,
- wobei zwischen dem stehenden Dichtelement (SSE) und dem Statorteil (CS) eine vierte stationäre Dichtung (SS4) auf einem vierten Durchmesser (DSS4) angeordnet ist zur Abdichtung gegen den ersten Differenzdruck,
**gekennzeichnet dadurch, dass**:
der Betrag der Differenz des vierten Durchmessers (DSS4) zu dem fünften Durchmesser (DSS5) ist kleiner als 10% des fünften Durchmessers.

2. Wellendichtungsanordnung (DGSM) nach Anspruch 1, wobei die weitere Zusatzwellendichtung eine Labyrinthdichtung (LS) ist,
wobei der stehenden Wellendichtungsteil ein stehender Labyrinthdichtungsteil (SLSM) ist,
wobei der rotierende Wellendichtungsteil ein rotierender Labyrinthdichtungsteil (RLSM) ist,
wobei die mittlere Wellendichtfläche eine mittlere Labyrinthdichtfläche (LSS) ist.

3. Wellendichtungsanordnung (DGSM) nach Anspruch 1 oder 2,
wobei der stehende Labyrinthdichtungsteil (SLSM) ein Teil des Statorteils (CS) ist oder an diesem fest angebracht ist und
wobei der rotierende Labyrinthdichtungsteil (RLSM) ein Teil des Rotorteils (RS) ist oder an diesem fest angebracht ist.

4. Wellendichtungsanordnung (DGSM) nach Anspruch 1, 2 oder 3,
wobei das Statorteil (CS), mit einer ersten stationären Dichtung (STS1) derart ausgebildet ist, dass sie in die Statorausnehmung (CR) dichtend einsetzbar ist und/oder das Rotorteil (RS), mit einer zweiten stationären Dichtung (STS2) derart ausgebildet ist, dass es auf der Welle (SH) dichtend anbringbar ist.

5. Wellendichtungsanordnung (DGSM) nach einem der Ansprüche 1 bis 4,
wobei die Labyrinthdichtung (SLS) die axial äußerste Dichtung der Wellendichtungsanordnung (DGSM) auf der
Hochdruckseite (HPS) ist.

6. Wellendichtungsanordnung (DGSM) nach einem der Ansprüche 1 bis 5,
wobei der Zwischenraum (IR) axial zwischen der Labyrinthdichtung (LS) und der Trockengasdichtung (DGS) eine Dichtungsgaszuleitung (SGS) aufweist zur Zuleitung eines Dichtungsgases (SG) zwischen der Labyrinthdichtung (LS) und der Trockengasdichtung (DGS),
wobei die Wellendichtungsanordnung (DGSM) auf der der Niederdruckseite (LPS) zugewendeten Seite der Trockengasdichtung (DGS) eine Dichtungsgasableitung (SGE) aufweist zur Ableitung von Dichtungsgas (SG), welches die Trockengasdichtung (DGS) passiert hat.

7. Wellendichtungsanordnung (DGSM) nach einem der Ansprüche 1 bis 6,
wobei das Rotorteil (RS) als eine Rotorhülse derart ausgebildet ist, dass es auf einer Welle (SH) eines sich entlang der Rotationsachse (AX) erstreckenden Rotors (R) anbringbar ist.

8. Wellendichtungsanordnung (DGSM) nach einem der Ansprüche 1 bis 7,
wobei das Statorteil (CS) als eine Statorhülse derart ausgebildet ist, dass es in eine Statorausnehmung (CR) einsetzbar ist.

## Claims

1. Shaft seal arrangement (DGSM) for a shaft seal (SHS) of a turbomachine (CO),
which extends in an axial direction along a rotational axis (AX),
- wherein the shaft seal arrangement (DGSM) has a high-pressure side (HPS) at one axial end and a low-pressure side (LPS) at the other axial end, comprising:
- a rotor part (RS) which rotates during operation,
- a stationary stator part (CS),
- at least one dry gas seal (DGS) which has a rotating sealing element (RSE) attached to the rotor part (RS) and a stationary sealing element (SSE) attached to the stator part (CS) for sealing a gap (IR) between the rotor part (RS) and the stator part (CS) against a first differential pressure,
- wherein the stationary sealing element (SSE) and the rotating sealing element (RSE) are arranged opposite each other on a sealing surface which extends radially and in the circumferential direction,
- wherein on the end of the high-pressure side (HPS) of the shaft seal arrangement (DGSM) provision is made in a series arrangement in relation to the dry gas seal (DGS) for a further additional shaft seal for sealing the gap (IR), comprising a stationary shaft seal part and a rotating shaft seal part,
- wherein a center labyrinth seal surface which extends in the circumferential direction and axial direction is arranged between the stationary shaft seal part and the rotating labyrinth seal part on a fifth diameter (DSS5) coaxially to the rotational axis (AX),
- wherein a fourth stationary seal (SS4) is arranged between the stationary sealing element (SSE) and the stator part (CS) on a fourth diameter (DSS4) for sealing against the first differential pressure,
**characterized in that**
the value of the difference of the fourth diameter (DSS4) to the fifth diameter (DSS5) is less than 10% of the fifth diameter.

2. Shaft seal arrangement (DGSM) according to Claim 1, wherein the further additional shaft seal is a labyrinth seal (LS),
wherein the stationary shaft seal part is a stationary labyrinth seal part (SLSM),
wherein the rotating shaft seal part is a rotating labyrinth seal part (RLSM),
wherein the center shaft sealing surface is a center labyrinth seal surface (LSS).

3. Shaft seal arrangement (DGSM) according to Claim 1 or 2,
wherein the stationary labyrinth seal part (SLSM) is a part of the stator part (CS) or is fixedly attached to this and wherein the rotating labyrinth seal part (RLSM) is a part of the rotor part (RS) or is fixedly attached to this.

4. Shaft seal arrangement (DGSM) according to Claim 1, 2 or 3,
wherein the stator part (CS) is designed with a first stationary seal (STS1) in such a way that it can be inserted with sealing effect into the stator recess (CR) and/or the rotor part (RS) is designed with a second stationary seal (STS2) in such a way that it can be attached with sealing effect on the shaft (SH).

5. Shaft seal arrangement (DGSM) according to one of Claims 1 to 4,
wherein the labyrinth seal (SLS) is the axially outermost seal of the shaft seal arrangement (DGSM) on the high-pressure side (HPS).

6. Shaft seal arrangement (DGSM) according to one of Claims 1 to 5, wherein the gap (IR) has a seal gas feed line (SGS) axially between the labyrinth seal (LS) and the dry gas seal (DGS) for directing a seal gas (SG) between the labyrinth seal (LS) and the dry gas seal (DGS),
wherein the shaft seal arrangement (DGSM) on the side of the dry gas seal (DGS) which faces the low-pressure side (LPS) has a seal gas discharge line (SGE) for the discharging of seal gas (SG) which passes through the dry gas seal (DGS).

7. Shaft seal arrangement (DGSM) according to one of Claims 1 to 6,
wherein the rotor part (RS) is designed as a rotor sleeve in such a way that it can be attached on a shaft (SH) of a rotor (R) which extends along the rotational axis (AX).

8. Shaft seal arrangement (DGSM) according to one of Claims 1 to 7,
wherein the stator art (CS) is designed as a stator sleeve in such a way that it can be inserted into a stator recess (CR).

## Revendications

1. Agencement ( DGSM ) d'étanchéité d'arbre pour une étanchéité ( SHS ) d'arbre d'une turbomachine ( CO ), qui s'étend dans une direction axiale suivant un axe ( AX ) de rotation,
- dans lequel l'agencement ( DGSM ) d'étanchéité d'arbre a, à une extrémité axiale, un côté ( HPS ) de haute pression et, à l'autre extrémité axiale, un côté ( LPS ) de basse pression, comprenant :
- une partie ( RS ) de rotor tournant en fonctionnement,
- une partie ( CS ) de stator fixe,
- au moins une étanchéité ( DGS ) à gaz sec, qui a un élément ( RSE ) d'étanchéité tournant mis sur la partie ( RS ) de rotor et un élément ( SSE ) d'étanchéité fixe mis sur la partie ( CS ) de stator pour rendre étanche un espace ( IR ) intermédiaire entre la partie ( RS ) de rotor et la partie ( CS ) de stator à l'encontre d'une première différence de pression,
- dans lequel l'élément ( SSE ) d'étanchéité fixe et l'élément ( RSE ) d'étanchéité tournant sont disposés en vis-à-vis sur une surface d'étanchéité s'étendant radialement et dans la direction périphérique,
- dans lequel il est prévu, suivant un montage série avec l'étanchéité ( DGS ) au gaz sec, à l'extrémité du côté ( HPS ) de haute pression de l'agencement ( DGSM ) d'étanchéité d'arbre, une autre étanchéité d'arbre supplémentaire pour rendre étanche l'espace ( IR ) intermédiaire, comprenant une partie d'étanchéité d'arbre fixe et une partie d'étanchéité d'arbre tournant,
- dans lequel une surface d'étanchéité d'arbre médiane, s'étendant dans la direction périphérique et dans la direction axiale, est disposée coaxialement à l'axe ( AX ) de rotation sur un cinquième diamètre ( DSS5 ) entre la partie d'étanchéité d'arbre fixe et la partie d'étanchéité d'arbre tournant,
- dans lequel il est disposé sur un quatrième diamètre ( DSS4 ) une quatrième étanchéité ( SS4 ) fixe entre l'élément ( SSE ) d'étanchéité fixe et la partie ( CS ) de stator pour assurer l'étanchéité à l'encontre de la première différence de pression,
**caractérisé en ce que**
la valeur absolue de la différence du quatrième diamètre ( DSS4 ) au cinquième diamètre ( DSS5 ) représente moins de 10 % du cinquième diamètre.

2. Agencement ( DGSM ) d'étanchéité d'arbre suivant la revendication 1,
dans lequel l'autre étanchéité d'arbre supplémentaire est une étanchéité ( LS ) en labyrinthe, la partie d'étanchéité d'arbre fixe étant une partie ( SLSM ) d'étanchéité fixe en labyrinthe,
la partie d'étanchéité d'arbre tournante étant une partie ( RLSM ) d'étanchéité tournante en labyrinthe,
la surface d'étanchéité d'arbre médiane étant une surface ( LSS ) d'étanchéité en labyrinthe médiane.

3. Agencement ( DGSM ) d'étanchéité d'arbre suivant la revendication 1 ou 2,
dans lequel la partie ( SLSM ) d'étanchéité en labyrinthe fixe est une partie de la partie ( CS ) de stator ou y est fixée et dans lequel la partie ( RLSM ) d'étanchéité en labyrinthe tournante est une partie de la partie ( LS ) de rotor ou est y fixée.

4. Agencement ( DGSM ) d'étanchéité d'arbre suivant la revendication 1, 2 ou 3,
dans lequel la partie ( CS ) de stator est constituée en ayant une première étanchéité ( STS1 ) fixe de manière à pouvoir être insérée de manière étanche dans l'évidement ( CR ) de stator et/ou la partie ( RS ) de rotor est constituée en ayant une deuxième étanchéité ( STS2 ) fixe de manière à pouvoir être mise avec étanchéité sur l'arbre ( SH ).

5. Agencement ( DGSM ) d'étanchéité d'arbre suivant l'une des revendications 1 à 4,
dans lequel l'étanchéité ( SLS ) en labyrinthe est l'étanchéité la plus à l'extérieur axialement de l'agencement ( DGSM ) d'étanchéité d'arbre du côté ( HPS ) de la haute pression.

6. Agencement ( DGSM ) d'étanchéité d'arbre suivant l'une des revendications 1 à 5,
dans lequel l'espace ( IR ) intermédiaire a axialement entre l'étanchéité ( LS ) en labyrinthe et l'étanchéité ( DGS ) au gaz sec un conduit ( SGS ) pour du gaz d'étanchéité pour l'apport d'un gaz ( SG ) d'étanchéité entre l'étanchéité ( LS ) en labyrinthe et l'étanchéité ( DGS ) au gaz sec, dans lequel l'agencement ( DGSM ) d'étanchéité d'arbre a, du côté tourné vers le côté ( LPS ) de basse pression de l'étanchéité ( DGS ) au gaz sec, un conduit ( SGE ) d'évacuation du gaz d'étanchéité pour évacuer du gaz ( SG ) d'étanchéité qui est passé dans l'étanchéité ( DGS ) au gaz sec.

7. Agencement ( DGSM ) d'étanchéité d'arbre suivant l'une des revendications 1 à 6,
dans lequel la partie ( RS ) de rotor est constituée sous la forme d'un manchon de rotor de manière à pouvoir être mise sur un arbre ( SH ) d'un rotor ( R ) s'étendant suivant l'axe ( AX ) de rotation.

8. Agencement ( DGSM ) d'étanchéité d'arbre suivant l'une des revendications 1 à 7,
dans lequel la partie ( CS ) de stator est constituée sous la forme d'un manchon de stator, de manière à pouvoir l'insérer dans un évidement ( CR ) de stator.
